# EUROPEAN PATENT APPLICATION

(11) **EP 4 811 263 A1**
(43) Date of publication of application: **23.09.2026**
(21) Application number: 24891640.5
(22) Date of filing: 27.09.2024
(51) Int. Cl.: G06Q 50/00, G06Q 50/10, H04W 4/021

(54) **REFERENCE REGION-BASED USER PLAY PROVISION SYSTEM FOR PLURALITY OF USERS**

(30) Priority: 14.11.2023 KR 20230156842
(71) Applicant: Altsoft, Inc., Seoul 06097 (KR)
(72) Inventor: KIM, Chan Hong, Seoul 06097 (KR)
(74) Representative: M. Zardi & Co S.A.
(86) International application number: PCT/KR2024/014765
(87) International publication number: WO 2025/105693

(57) **Abstract**

According to a reference region-based user play provision system for a plurality of users, which is proposed in the present invention, when a plurality of users perform individual plays within a reference region of a local device, the entire play is completed by combining the respective individual plays, and when the entire play is completed, rewards such as special rewards are provided to the users so as to allow multiple users to interact with one another within the reference region and provide fun of playing together.

## Description

### Technical Field

The present disclosure relates to a system for providing user-engaged play and, more particularly, to a system for providing reference-region-based user-engaged play for a plurality of users.

### Background Art

The content described in this section simply provides background information on one exemplary embodiment of the present disclosure, and does not constitute the related art.

The importance of social media for communicating with others on the Web is increasingly growing. However, since social media is limited to online, people are neglecting offline communication or engage in offline conversations with difficulty. In offline gatherings, people often become engrossed in their smartphones, and within many online relationships, individuals may actually feel isolated. Accordingly, there is a need to develop technology capable of organically and systematically connecting online and offline spaces to facilitate offline gatherings and communication.

Meanwhile, recent offline activities such as shopping, tourism, and sightseeing are organically combined with online activities, so as to enable people to authenticate or share their offline activities through online social network services (SNS), receive various kinds of information about offline destinations in real time online, and make reservations in real time through online channels right away when reservations are needed. In order to more organically connect and activate these online and offline activities, allow multiple users to interact with each other, and provide these users with more diverse and fun experiences, technological development for various connection methods and services is required.

The above-described background art is technical information that the present inventor possessed for derivation of the present disclosure or obtained in a derivation process of the present disclosure, and is not necessarily known technology disclosed to the general public prior to filing the exemplary embodiment of the present disclosure.

### Disclosure

### Technical Problem

The present disclosure is proposed to solve the problems as described above on the existing proposed methods, and an objective of the present disclosure is to provide a system for providing reference-region-based user-engaged play for a plurality of users, wherein when the plurality of users engages in individual content play instances within a reference region of a local device, the overall play experience is completed through a combination of these individual content play instances and each user is provided with a special reward and other rewards upon completing the overall play experience, whereby the multiple users are allowed to interact with each other within the reference region and to have fun playing together.

However, the technical problems to be solved by the present disclosure are not limited to the technical problems as described above, and other technical problems may exist. Even though not explicitly mentioned, the present disclosure naturally includes other objectives or effects identifiable from the problem solutions or embodiments.

### Technical Solution

According to the features of the embodiments of the present disclosure to achieve the above objective, there is provided a system for providing reference-region-based user-engaged play for a plurality of users,
the system using a local device and including:
the local device installed at a specific location and having set reference regions; and
a service server configured to support the user-engaged play in which the overall play experience is completed through a combination of individual content play instances performed by the plurality of users within each reference region,
wherein the overall play experience is composed of:
the combination of these individual content play instances performed by the plurality of users in a simultaneous manner, in a sequential manner, or in a manner of combining some simultaneous content play and some sequential content play.

Preferably, the service server may include:
a storage unit configured to store information of setting each reference region of the local device;
a content play processing unit configured to receive the individual content play instances from at least one of the local device and a user terminal within each reference region, and determine whether the overall play experience is completed through the combination of the received individual content play instances; and
a content play reflection unit configured to execute at least one selected from a group that comprises controlling the local device and executing content according to a processing result of the content play processing unit.

More preferably,
the content play reflection unit controls the local device according to the processing result of the content play processing unit, and may include a local device control module configured to control the local device in a first mode when the overall play experience is not completed, and control the local device in a second mode according to the overall play experience when the overall play experience is completed.

Even more preferably,
the second mode may be a mode for providing a special reward to each user through the local device.

More preferably,
the content play reflection unit may include a content control module configured to reflect the processing result of the content play processing unit to the content being used by the plurality of users.

Preferably,
the system may further include: a user terminal used by each user for the individual content play instances, and
the service server may further include:
a location determination unit configured to use location information of the user terminal, so as to determine whether a location of the user terminal is within each reference region of the local device; and
a content play activation unit configured to activate the user-engaged play on the user terminal, so as to enable the individual content play instances to be performed on the user terminal at the location included in each reference region of the local device according to a determination result of the location determination unit.

Preferably,
the service server may further include an information provision unit configured to provide, to the user terminal, local device information comprising information on each reference region of the local device and the user-engaged play playable in each reference region.

### Advantageous Effects

According to the system for providing the reference-region-based user-engaged play for the plurality of users, when the plurality of users engages in individual content play instances within a reference region of a local device, the overall play experience is completed through a combination of these individual content play instances and each user is provided with a special reward and other rewards upon completing the overall play experience, whereby the multiple users are allowed to interact with each other within the reference region and to have fun playing together.

In addition, the various and advantageous strong points and effects of the present disclosure are not limited to the above-described content, and will be more easily understood in the process of describing the specific embodiment of the present disclosure.

### Description of Drawings

FIG. 1 is a view illustrating a configuration of a system for providing reference-region-based user-engaged play for a plurality of users according to one exemplary embodiment of the present disclosure.
FIG. 2 is a view illustrating a detailed configuration of a service server in the system for providing the reference-region-based user-engaged play for the plurality of users according to one exemplary embodiment of the present disclosure.
FIG. 3 is a view illustrating a detailed configuration of a content play reflection unit in the system for providing the reference-region-based user-engaged play for the plurality of users according to one exemplary embodiment of the present disclosure.
FIG. 4 is a view illustrating an example of how an ordered product is provided from a local device controlled in a first mode in the system for providing the reference-region-based user-engaged play for the plurality of users according to one exemplary embodiment of the present disclosure,
FIG. 5 is a view illustrating an example of how a bonus item in addition to the ordered product is provided from the local device controlled in a second mode in the system for providing the reference-region-based user-engaged play for the plurality of users according to one exemplary embodiment of the present disclosure.
FIG. 6 is a view illustrating an example of how a star is displayed on the local device controlled in the first mode in the system for providing the reference-region-based user-engaged play for the plurality of users according to one exemplary embodiment of the present disclosure.
FIG. 7 is a view illustrating an example how fireworks in addition to stars are being displayed on the local device controlled in the second mode in the system for providing the reference-region-based user-engaged play for the plurality of users according to one embodiment of the present invention.

### <Description of the Reference Numerals in the Drawings>

1: reference region
100: service server
110: storage unit
120: content play processing unit
130: content play reflection unit
131: local device control module
132: content control module
140: location determination unit
150: content play activation unit
160: information provision unit
200: local device
300: user terminal

### Best Mode

Hereinafter, one exemplary embodiment of the present disclosure will be described in detail with reference to the accompanying drawings so that those skilled in the art may easily implement the embodiment of the present disclosure. However, the present disclosure is not limited to the exemplary embodiments described herein and may be embodied in many different forms. In addition, in order to clearly describe the present disclosure in the drawings, parts irrelevant to the description are omitted, and like reference numerals designate like elements throughout the specification.

Throughout the present specification, when a part is said to be "connected" to another part, an expression such as "connected" is intended to include not only "directly connected" but also "indirectly connected", with an intermediate element disposed therebetween. In addition, it will be further understood that, when a part is said to "include" or "comprise" a certain component, it means that it may further include or comprise other components, but does not exclude other components unless the context clearly indicates otherwise, and does not preclude the presence or addition of one or more other features, integers, steps, operations, elements, components, and/or combinations thereof.

The following exemplary embodiment is a detailed description for better understanding of the exemplary embodiment of the present disclosure, and do not limit the scope of the present disclosure. Therefore, embodiments of the same scope that perform the same functions as those of the present disclosure will also fall within the scope of the present disclosure.

In addition, each component, process, progress, method, or the like included in each exemplary embodiment of the present disclosure may be shared within a range that does not contradict each other technically.

In addition, in the present disclosure, some of the operations or functions described as being performed by a terminal, apparatus, or device may be performed instead by a server connected to the corresponding terminal, apparatus, or device. Likewise, some of the operations or functions described as being performed by the server may also be performed by the terminal, apparatus, or device connected to the corresponding server.

In particular, as a means for executing a system according to each exemplary embodiment of the present disclosure, there may be provided an application or a web server. In addition as a means for reading a recording medium on which the application or web server is recorded, this means may include not only a general PC such as a general desktop or laptop computer, but also a mobile terminal such as a smartphone and a tablet PC.

Hereinafter, exemplary embodiments of the present disclosure will be described in detail with reference to the accompanying drawings.

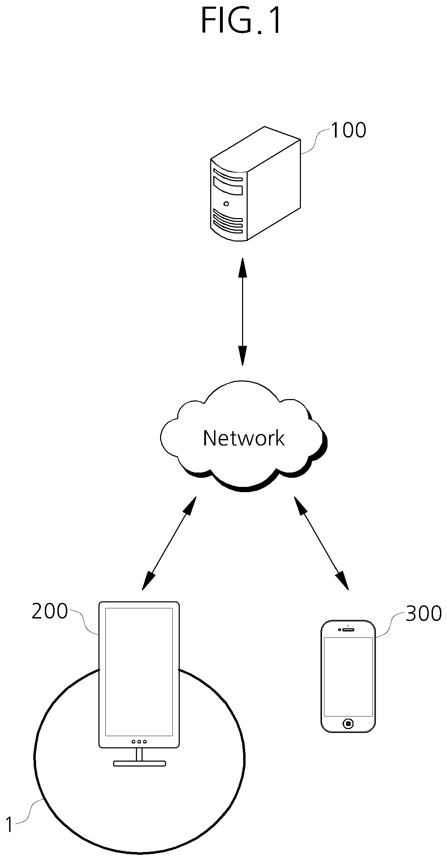

FIG. 1 is a view illustrating a configuration of a system for providing reference region 1-based user-engaged play for a plurality of users according to one exemplary embodiment of the present disclosure. As illustrated in FIG. 1, according to one exemplary embodiment of the present disclosure, the system for providing the reference region 1-based user-engaged play for the plurality of users is configured to include: a local device 200 installed at a specific location and having set reference regions 1; and a service server 100 configured to support user-engaged play in which the overall play experience is completed through a combination of individual content play instances performed by the plurality of users within the reference region 1, and the system is configured to further include: a user terminal 300 used by each user for the individual content play instances.

That is, when the plurality of users engages in individual content play instances within the reference region 1 of the local device 200, the overall play experience may be completed through the combination of these individual content play instances and each user is provided with a predetermined benefit, reward, etc. upon completing the overall play experience, whereby the multiple users are allowed to have fun playing together. Here, the overall play experience may be shaped through the combination of individual content play instances performed by the plurality of users in a simultaneous manner, in a sequential manner, or in a manner of combining some simultaneous content play and some sequential content play.

Meanwhile, the user-engaged play refers to a concept that includes both the individual content play instances and the overall play experience, performing missions such as games, surveys, play, quizzes, learning, and product purchases in the reference region 1 of the local device 200. In addition, each user may engage in the user-engaged play through interaction with the local device 200. More specifically, depending on the types, settings, etc. of missions, the user-engaged play may be performed through at least one selected from the operation of the local device 200, the operation of the user terminal 300, and the operation of the local device 200 using the user terminal 300.

For example, when the local device 200 is a vending machine, user-engaged play may be an activity of purchasing a product from the vending machine. Here, individual content play instances may be that each user purchases one product, and the overall play experience may be that five or more products are purchased by users different from each other. In addition, when the local device 200 is an LED display, user-engaged play may be an activity of manipulating the LED display with the user terminal 300 by touching or clicking a button or by handling the button with the other actions on the user terminal 300 so as to output a specific image on the LED display. Here, the individual content play instances refers to an activity performed by each individual user manipulating the LED display, and the overall play experience may refer to activities performed by five or ten users manipulating the LED display at the same time.

Meanwhile, the overall play experience may be shaped through the combination of individual content play instances performed by the plurality of users in a simultaneous manner, in a sequential manner, or in a manner of combining some simultaneous content play and some sequential content play. That is, the overall play experience may be composed of the individual content play instances simultaneously performed by the plurality of users, but the overall play experience may also be composed of all the individual content play instances performed by all five users one by one, or may also shaped by the combination of some simultaneous content play and some sequential content play. Here, engaging in the individual content play instances one by one may mean that the plurality of users engage in the individual play one by one regardless of the order, but depending on exemplary embodiments, it may mean that the order is set among the users, allowing them to engage in their individual content play instances one by one. In this way, the simultaneous, sequential, or some simultaneous and some sequential execution of the individual content play instances constituting the overall play experience may vary depending on the missions, and may also vary depending on the features of each local device.

Hereinafter, each component of the system for providing the reference region 1-based user-engaged play for the plurality of users according to one exemplary embodiment of the present disclosure will be described in detail with reference to FIG. 1.

The service server 100 may support user-engaged play in which the overall play experience is completed through the combination of individual content play instances performed by a plurality of users within a reference region 1. Here, the user-engaged play may mean performing missions of activities such as games, surveys, play, quizzes, learning, and product purchases in the reference region 1 of the local device 200.

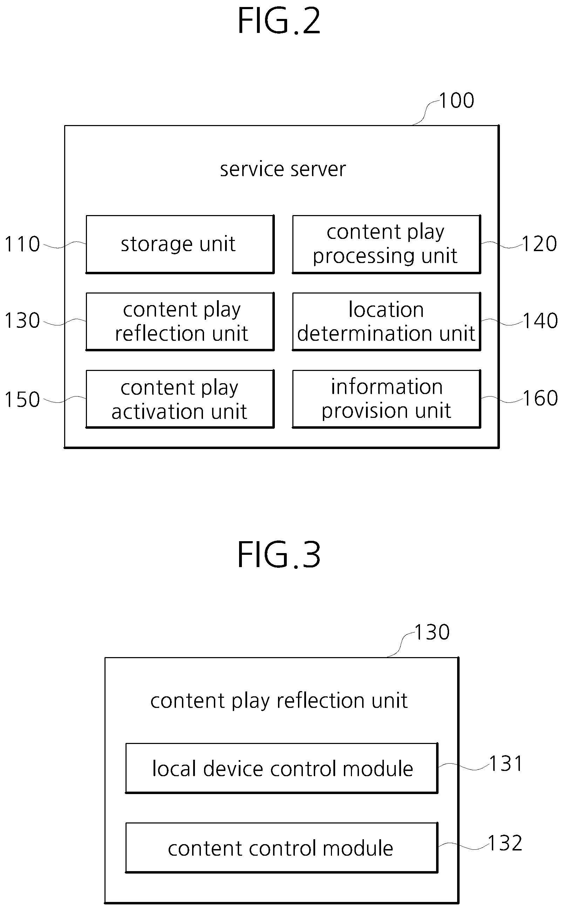

Through a network, the service server 100 may manage a plurality of local devices 200 and manage a reference region 1 and content 10 of each local device 200. The service server 100 may operate and manage the setting of the reference region 1 for each local device 200, the setting of missions for each local device 200, the playing of each mission, the user-engaged play 20, etc. In this case, the service server 100 may operate a plurality of missions, and the kinds of content 10 different from each other or the missions different from each other may be assigned to each local device 200. However, the same content 10 or the same mission may be assigned to multiple local devices 200. The detailed configuration of the service server 100 will be described in detail later with reference to FIG. 2.

The local device 200 may be installed in a specific location and have a set reference region 1. In addition, a mission may be assigned to each local device 200, and a user may perform the mission assigned to a corresponding local device 200 within a reference region 1 of the specific local device 200.

Meanwhile, the local device 200 may be at least one selected from a group including an IoT device, a signage device, and a display panel. More specifically, the IoT device may be a device such as an IoT vending machine for transmitting product purchase information to the service server 100, and an IoT bicycle and the like for transmitting sensing information such as a wheel rotation count and a traveled distance to the service server 100, but is not limited thereto. As long as an IoT device, such as an LED display, an IoT streetlight, an IoT seesaw, or the like that operates through an IoT sensor, is capable of transmitting the sensing information collected using the installed sensor to the service server 100 and being operated by a user within a reference region 1 to do user-engaged play, this IoT device can serve as the local device 200 of the present disclosure regardless of its specific form or configuration.

In addition, the signage device is a video display device installed in public places, commercial spaces, or the like to provide various kinds of information and advertisements in real time. The signage device is capable of outputting content 10 through its display and interacting with users, so as to enable the users to engage in user-engaged play through the signage device, thereby serving as the local device 200 of the present disclosure.

In addition, the display panel is a device for outputting information without user interaction, and is capable of outputting the following information: mission information; user-engaged play information through a user terminal 300; user-engaged play results; and others. In particular, the display panel has an advantage of a cheaper installation cost than the signage device, while ensuring easy maintenance and allowing its screen to be easily seen from distance owing to its simple configurable structure.

Meanwhile, the reference region 1 of the local device 200 may be a region including the location of the local device 200 or a region adjacent to the location of the local device 200. That is, the reference region 1 does not necessarily include the local device 200, but may be set adjacent to the location close enough to the extent that a user within the reference region 1 may be said to have visited or accessed the local device 200. Here, the region adjacent to the location of the local device 200 may mean that the maximum distance between the location of the installed local device 200 and the corresponding region is less than or equal to a preset distance.

Such a local device 200 may be installed in a tourist destination such as Suwon Hwaseong Fortress, an administrative district such as Gangnam-gu in Seoul, a commercial space such as COEX, an amusement park, a museum, etc. Depending on exemplary embodiments, the reference region 1 may be a region directly set by an operator of the content 10, an administrator of the local device 200, and others. Meanwhile, one mission and one reference region 1 may be set in a local device 200, but depending on exemplary embodiments, a plurality of missions and a plurality of reference regions 1 may each be set in one local device 200.

The user terminal 300 may be an electronic device used by a user for individual content play instances. Here, the electronic device may include at least one of the following devices: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, or a wearable device. The wearable device may include at least one of devices selected from the following types: an accessory (e.g., a watch, a ring, a bracelet, an ankle bracelet, a necklace, glasses, contact lenses, or a head-mounted device (HMD)); a textile- or garment-integrated device (e.g., an electronic garment); a body-worn device (e.g., a skin pad or a tattoo); and a bio-implantable circuit device. In various exemplary embodiments, the electronic devices are not limited to the devices described above, and may be combinations of two or more of the various devices described above.

The user may access the service server 100 via the web or app (application) through the user terminal 300 and check the followings: the list of ongoing missions, the location and reference region 1 of the local device 200, the status of participation in My Mission, the progress of My Mission, the missions playable at the current location, etc. In addition, when user authentication is required on the local device 200, the user terminal 300 may also be used for the user authentication.

FIG. 2 is a view illustrating a detailed configuration of the service server 100 in the system for providing the reference region 1-based user-engaged play for the plurality of users according to one exemplary embodiment of the present disclosure. As illustrated in FIG. 2, according to one exemplary embodiment of the present disclosure, the service server 100 of the system for providing the reference region 1-based user-engaged play for the plurality of users may be configured to include: a storage unit 110, a content play processing unit 120, and a content play reflection unit 130, and may be configured to further include: a location determination unit 140, a content play activation unit 150, and an information provision unit 160.

The storage unit 110 may store the information of setting each reference region 1 of each local device 200. The storage unit 110 may store and manage device information such as the installation location of each local device 200, the information of setting each reference region 1 of each local device 200, the device ID, and the status information, and may store and manage these kinds of information along with information on the content 10 and missions, which are assigned to each local device 200.

The content play processing unit 120 may receive individual content play instances from at least one of the local device 200 and the user terminal 300 within a reference region 1, and determine whether the overall play experience is completed through the combination of the received individual content play instances. That is, depending on the types, settings, and others of missions, the individual content play instances may be performed through at least one of the direct operation of a local device 200 of a user, the operation of a user terminal 300, and the operation of the local device 200 using the user terminal 300. Accordingly, the content play processing unit 120 may receive information about the individual content play instances from the at least one of the local device 200 and the user terminal 300 and determine whether the overall play experience is completed. For example, when multiple users purchase products by using their own user terminals 300 within the reference region 1 from an IoT vending machine, the content play processing unit 120 may receive information about each user's product purchase, i.e., information on the date and time of each product purchase, information on the purchased products, etc., and analyze whether five or more users have purchased the products simultaneously or sequentially, thereby determining whether the overall play experience is completed.

Meanwhile, the content play processing unit 120 may determine that the overall play experience have completed when a plurality of users belonging to a registered group perform their individual content play instances in a simultaneous manner, in a sequential manner, or in a manner of combining some simultaneous content play and some sequential content play. To this end, the content play processing unit 120 may register the group in advance so as to specify the plurality of users who perform their missions together. In this case, each group may be registered according to the missions, but it may also be configured so as to allow a group that has been set once to play multiple missions together.

The content play reflection unit 130 may execute at least one selected from a group that includes controlling a local device 200 and executing content according to a processing result of the content play processing unit 120. That is, the content play reflection unit 130 may allow the results of the overall play experience to be reflected on the basis of each mission when the content play processing unit 120 determines that the overall play experience is completed.

FIG. 3 is a view illustrating a detailed configuration of the content play reflection unit 130 in the system for providing the reference region 1-based user-engaged play for the plurality of users according to one exemplary embodiment of the present disclosure. As illustrated in FIG. 3, in the system for providing the reference region 1-based user-engaged play for the plurality of users according to one exemplary embodiment of the present disclosure, the content play reflection unit 130 may be configured to include a local device control module 131 and a content control module 132.

The local device control module 131 controls a local device 200 according to the processing result of the content play processing unit 120, so as to control the local device 200 in a first mode when the overall play experience are not completed, and control the local device 200 in a second mode according to the overall play experience when the overall play experience is completed. That is, the local device control module 131 is a component configured to reflect the processing result of the content play processing unit 120 to the local device 200. The first mode may be a mode that solely reflects individual content play instances, and the second mode may be a mode in which both the individual content play instances and the overall play experience are reflected. More specifically, the second mode may be a mode that provides a special reward to each user through the local device 200.

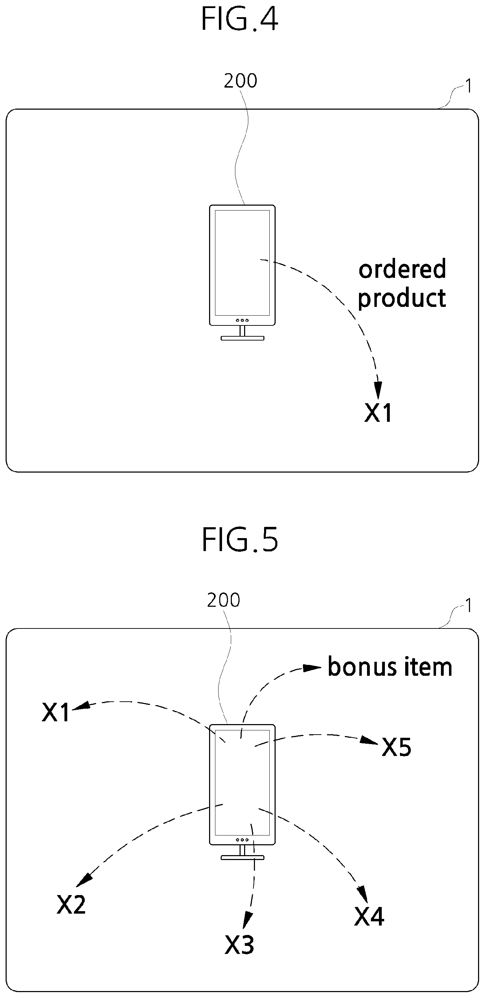

FIG. 4 is a view illustrating an example of an ordered product being ordered from a local device 200 controlled in the first mode in the system for providing the reference region 1-based user-engaged play for the plurality of users according to one exemplary embodiment of the present disclosure, and FIG. 5 is a view illustrating an example of a bonus item being ordered in addition to the ordered product from the local device 200 controlled in the second mode in the system for providing the reference region 1-based user-engaged play for the plurality of users according to one exemplary embodiment of the present disclosure. When the local device 200 is an IoT vending machine and the overall play experience refer to activities of purchasing the products by five or more users, then as shown in FIG. 4, one user X1 may purchase a product from the local device 200 within the reference region 1 and engage in his or her individual content play instances. In that case, the local device 200 is controlled in the first mode for providing the purchased product, thereby providing only the ordered product to the user. However, as illustrated in FIG. 5, when five users X1, X2, X3, X4, and X5 within the reference region 1 purchase their products from the local device 200 simultaneously or sequentially, the overall play experience is completed through each user's product purchase, so the local device 200 may be controlled in the second mode for providing a special reward. Therefore, a bonus item can be offered as the special reward. Here, the bonus item may be the same product as the product purchased by one user, or it may also be an item only available as the special reward, an item as a limited edition item, etc.

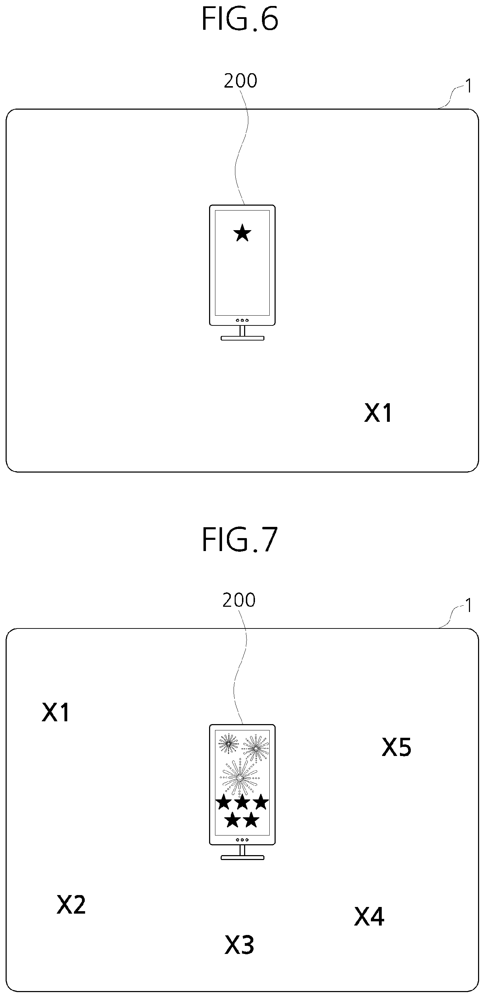

FIG. 6 is a view illustrating an example how a star is being displayed on the local device 200 controlled in the first mode in the system for providing the reference region 1-based user-engaged play for the plurality of users according to one exemplary embodiment of the present disclosure, and FIG. 7 is a view illustrating an example how fireworks in addition to stars are being displayed on the local device 200 controlled in the second mode in the system for providing the reference region 1-based user-engaged play for the plurality of users according to one exemplary embodiment of the present disclosure. When the local device 200 is a display panel and the overall play experience refer to activities of controlling the local device 200 with user terminals 300 by five or more users, then as shown in FIG. 6, in a case of one user X1 engaging in individual content play instances for controlling the local device 200 within the reference region 1, the local device 200 is controlled in the first mode that solely reflects the individual content play instances, thereby allowing one star to be output on the display panel. However, as illustrated in FIG. 7, when the five users X1, X2, X3, X4, and X5 within the reference region 1 simultaneously engage in their individual content play instances for controlling the local device 200, the overall play experience is completed through the combination of these individual content play instances performed by each user, so the local device 200 may be controlled in the second mode for providing the special reward. Accordingly, along with the stars (i.e., five stars due to five individual content play instances) corresponding to the respective individual content play instances, firecrackers or fireworks may be displayed as the special reward.

The content control module 132 may reflect the processing result of the content play processing unit 120 to content being used by a plurality of users. Here, the content may be the user-engaged play content composed by including at least one or more missions. For example, when there is content of an IoT bicycle riding game, then the corresponding content may be composed of the missions in which all three users ride IoT bicycles installed at a specific location and ride two kilometers. The content play processing unit 120 may receive sensing information, such as a specific user's travelled distance, from each IoT bicycle and determine whether the overall play experience is completed or not. The content control module 132 may receive information on whether the overall play experience is completed from the content play processing unit 120 and reflect it to the content of the IoT bicycle riding game.

The location determination unit 140 may determine whether a location of a user terminal 300 is within a reference region 1 of a local device 200 by using the location information of the user terminal 300. The above-described content play processing unit 120 may allow a user to engage in user-engaged play with his or her user terminal 300 located within the reference region 1 of the local device 200 according to a determination result of the location determination unit 140.

The content play activation unit 150 may activate the user-engaged play on the user terminal 300, so as to allow individual content play instances to be performed in the user terminal 300 at the location included in the reference region 1 of the local device 200 according to the determination result of the location determination unit 140. That is, when the location determination unit 140 determines that the location of the user terminal 300 is within the reference region 1 of the local device 200, the content play activation unit 150 may activate the missions assigned to the corresponding local device 200 in the user terminal 300. The user may check the activated missions and engage in the individual content play instances by using at least one of the local device 200 and the user terminal 300.

The information provision unit 160 may provide local device 200 information including information about the reference region 1 of the local device 200 and the user-engaged play playable in the reference region 1 to the user terminal 300. More specifically, the information provision unit 160 may provide the information such as the installation location of the local device 200, the reference region 1 of the local device 200, the content of the user-engaged play, the play method, etc. In addition, the information provision unit 160 may provide information such as the reference region 1 or the installation location of the local device 200 by displaying it on a map in conjunction with a mobile map.

In addition, the information provision unit 160 may share, with the user terminal 300, the results of the individual content play instances and the overall play experience, the results of receiving special rewards according to the user-engaged play, etc. More specifically, the information provision unit 160 may manage the processing results of both the content play processing unit 120 and the content play reflection unit 130 in an integrated manner, and may organize and provide, upon a user request, the integrated processing results by at least one of dimensions: per local device 200, per user, and per user-engaged play. Depending on exemplary embodiments, the information provision unit 160 may also provide the statistical information such as the number of users who played the user-engaged play, the number of participations, or the like, the information on rankings, the information on rewards paid, and other information.

As described above, according to the system for providing the reference region 1-based user-engaged play for the plurality of users, when the plurality of users engages in the individual content play instances within the reference region 1 of the local device 200, the overall play experience may be completed through the combination of individual content play instances and each user may be provided with the special reward and other rewards upon completing the overall play experience, whereby the multiple users are allowed to interact with each other within the reference region 1 and to have fun playing together.

The exemplary embodiments of the present disclosure may also be implemented in the form of a computer program stored in a medium executed by a computer or a recording medium including instructions executable by a computer. Computer readable media may be any available media that may be accessed by a computer, and includes both volatile and non-volatile media, and removable and non-removable media. In addition, the computer readable media may include both computer storage media and communication media. The computer storage media includes both volatile and non-volatile, and removable and non-removable media, which are implemented in any method or technology for storing information such as computer readable instructions, data structures, program modules, or other data. The communication media typically include computer readable instructions, data structures, program modules, or other data in a modulated data signal such as a carrier wave, or other transmission mechanism, and include any information delivery media.

The above description of the present disclosure is for illustration, and it will be understood that those skilled in the art to which the present disclosure pertains may easily transform the present disclosure in other specific forms without departing from the technical spirit or essential features thereof. Therefore, it should be understood that the above-described exemplary embodiments are illustrative in all respects and not restrictive. For example, each component described as a single type may be implemented in a distributed manner, and similarly, components described as distributed may be implemented in a combined form.

The scope of the present disclosure is indicated by the following claims rather than the above detailed description, and all changes or modifications derived from the meaning and scope of the claims and equivalent concepts should be interpreted as being included in the claims of the present disclosure.

## Claims

1. A system for providing user-engaged play for a plurality of users, the system using a local device (200) and comprising:
the local device (200) installed at a specific location and having set reference regions (1); and
a service server (100) configured to support the user-engaged play in which the overall play experience is completed through a combination of individual content play instances performed by the plurality of users within each reference region (1),
wherein the overall play experience is composed of the combination of these individual content play instances performed by the plurality of users in a simultaneous manner, in a sequential manner, or in a manner of combining some simultaneous content play and some sequential content play, and
a plurality of missions and a plurality of reference regions (1) are set in one local device (200), respectively.

2. The system of claim 1, wherein the service server (100) comprises:
a storage unit (110) configured to store information of setting each reference region (1) of the local device (200);
a content play processing unit (120) configured to receive the individual content play instances from at least one of the local device (200) and a user terminal (300) within each reference region (1), and determine whether the overall play experience is completed through the combination of the received individual content play instances; and
a content play reflection unit (130) configured to execute at least one selected from a group that comprises controlling the local device (200) and executing content according to a processing result of the content play processing unit (120).

3. The system of claim 2, wherein the content play reflection unit (130) controls the local device (200) according to the processing result of the content play processing unit (120), and comprises:
a local device control module (131) configured to control the local device (200) in a first mode when the overall play experience is not completed, and control the local device (200) in a second mode according to the overall play experience when the overall play experience is completed.

4. The system of claim 3, wherein the second mode is a mode for providing a special reward to each user through the local device (200).

5. The system of claim 2, wherein the content play reflection unit (130) comprises:
a content control module (132) configured to reflect the processing result of the content play processing unit (120) to the content being used by the plurality of users.

6. The system of claim 1, further comprising:
a user terminal (300) used by each user for the individual content play instances, and
the service server (100) further comprises:
a location determination unit (140) configured to use location information of the user terminal (300), so as to determine whether a location of the user terminal (300) is within each reference region (1) of the local device (200); and
a content play activation unit (150) configured to activate the user-engaged play on the user terminal (300), so as to enable the individual content play instances to be performed on the user terminal (300) at the location included in each reference region (1) of the local device (200) according to a determination result of the location determination unit (140).

7. The system of claim 6, wherein the service server (100) further comprises:
an information provision unit (160) configured to provide, to the user terminal (300), local device (200) information comprising information on each reference region (1) of the local device (200) and the user-engaged play playable in each reference region (1).
